(19) Europäisches Patentamt
European Patent Office
Office européen des brevets

(11) **EP 4 465 258 A1**

(12) **EUROPEAN PATENT APPLICATION**

(43) Date of publication:
**20.11.2024 Bulletin 2024/47**

(21) Application number: **24175445.6**

(22) Date of filing: **13.05.2024**

(51) International Patent Classification (IPC):
**G06V 20/59** (2022.01)    **B60K 35/10** (2024.01)
**G06F 3/01** (2006.01)    **G06V 40/10** (2022.01)
**G06V 40/20** (2022.01)

(52) Cooperative Patent Classification (CPC):
**G06V 40/113; B60K 35/10; G06F 3/017;
G06V 20/59; G06V 40/11; G06V 40/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310546846**

(71) Applicant: **Bayerische Motoren Werke
Aktiengesellschaft
80809 München (DE)**

(72) Inventor: **Li, Allen
Shenyang 110001 (CN)**

(54) **METHOD AND SYSTEM FOR HAND GESTURE RECOGNITION**

(57)    The invention provides a hand gesture recognition method, system and medium for a vehicle, the method comprising: obtaining an input image to be recognized; detecting a hand region in the input image; extracting coordinates of hand key points in the hand region, wherein the hand key points include a wrist j oint point and a plurality of finger j oint points; normalizing the coordinates of each of the plurality of finger j oint points relative to the wrist j oint point by utilizing a distance between the wrist j oint point and an adjacent finger j oint point with the wrist joint point as an origin; and feeding the normalized coordinates of each of the plurality of finger joint points relative to the wrist joint point into a hand gesture classification model to recognize a hand gesture. The invention also provides a vehicle with the above described hand gesture recognition function.

300

Fig. 3

EP 4 465 258 A1

**Description**

FIELD OF THE INVENTION

The present disclosure relates to the field of artificial intelligence, and in more particular, to a method and a system for hand gesture recognition.

BACKGROUND OF THE INVENTION

With development of advanced assisted driving and autonomous driving, vehicles become more and more intelligent. As part of vehicle intelligence, human-computer interaction directly affects the user's experience of intelligent driving functions. In human-computer interaction, it would be more intelligent and convenient to use hand gestures to interact with a vehicle, which further improves user experience.

However, current schemes using computer vision technology to achieve hand gesture recognition usually require input of an entire image to classify gestures, which will require a large amount of computing power, which can be difficult for vehicles with electronic control units (ECUs) with lower power to achieve. In addition, when training a hand gesture classification model, a large amount of image data is also required as training samples for model training, which will significantly increase time for training and recognition and is difficult to deploy directly on the vehicle side.

Therefore, it is expected to provide an improved hand gesture recognition solution, so that the model requires less training data and is independent of hand size and its position in an image, thereby significantly reducing requirements for computing time and computing power, and improving accuracies of recognition results. It can be directly deployed on the vehicle side, thereby further improving users' driving experience.

SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used to assist in determining the scope of the claimed subject matter.

In view of the above problems, in accordance with a first aspect of the present disclosure, a hand gesture recognition method for a vehicle is provided, the method comprising: obtaining an input image to be recognized; detecting a hand region in the input image; extracting coordinates of hand key points in the hand region, wherein the hand key points include a wrist joint point and a plurality of finger joint points; normalizing the coordinates of each of the plurality of finger joint points relative to the wrist joint point by utilizing a distance between the wrist joint point and an adjacent finger joint point with the wrist joint point as an origin; and feeding the normalized coordinates of each of the plurality of finger joint points relative to the wrist joint point into a hand gesture classification model to recognize a hand gesture.

In the embodiment of the present disclosure, by detecting hand key points (including the wrist joint point and the finger joint points) and using a distance between the wrist joint point and the adjacent finger joint point to normalize the coordinate data of each finger joint point relative to the wrist joint point (as the origin), position-angle invariance can be realized, so that a subsequent hand gesture recognition result is more accurate and the required training data is less, model can be directly deployed on the vehicle side, and the computing power requirements are lower.

In accordance with an embodiment of the present disclosure, the adjacent finger joint point is a pinky metacarpal joint point.

In accordance with a further embodiment of the present disclosure, detecting a hand region in the input image further comprising: feeding the input image into a palm detection model to obtain a hand bounding box containing a hand region; and obtaining the hand region by cutting according to the hand bounding box.

In accordance with a further embodiment of the present disclosure, extracting coordinates of hand key points in the hand region further comprising: predicting the coordinates of hand key points in the hand region by regression using a key point positioning model.

In accordance with a further embodiment of the present disclosure, the hand gesture classification model is trained by machine learning.

In accordance with a further embodiment of the present disclosure, the hand gesture classification model is trained by: obtaining a training sample image; detecting a hand region in the training sample image; extracting coordinates of hand key points in the hand region, wherein the hand key points include a wrist j oint point and a plurality of finger j oint points; normalizing the coordinates of each of the plurality of finger j oint points relative to the wrist j oint point by utilizing the distance between the wrist j oint point and an adjacent finger j oint point with the wrist joint point as an origin; and feeding the normalized coordinates of each of the plurality of finger j oint points relative to the wrist j oint point into the hand gesture classification model to recognize an actual hand gesture; and training the hand gesture classification model as a classifier based on the actual hand gesture and a target hand gesture corresponding to the training sample image until the model converges.

In accordance with a further embodiment of the present disclosure, when training the hand gesture classification model, the target hand gesture corresponding to the training sample image is customized.

In accordance with a second aspect of the present disclosure, a hand gesture recognition system is provided, the system comprising: an image obtaining means configured to obtain an input image to be recognized; a hand detection means configured to detect a hand region in the input image; a hand key point extraction means configured to extract coordinates of hand key points in the hand region, wherein the hand key points include a wrist joint point and a plurality of finger joint points; data normalization means configured to normalize the coordinates of each of the plurality of finger j oint points relative to the wrist j oint point by utilizing the distance between the wrist joint point and an adjacent finger joint point with the wrist joint point as an origin; and a hand gesture recognition means configured to feed the normalized coordinates of each of the plurality of finger j oint points relative to the wrist j oint point into a hand gesture classification model to recognize a hand gesture.

In accordance with an embodiment of the present disclosure, the adjacent finger joint point is a pinky metacarpal joint point.

In accordance with a further embodiment of the present disclosure, the hand detection means further configured to: feed the input image into a palm detection model to obtain a hand bounding box containing a hand region; and obtain the hand region by cutting according to the hand bounding box.

In accordance with a further embodiment of the present disclosure, the hand key point extraction means further configured to predict the coordinates of hand key points in the hand region by regression using a key point positioning model.

In accordance with a further embodiment of the present disclosure, the hand gesture classification model is trained by: obtaining a training sample image; detecting a hand region in the training sample image; extracting coordinates of hand key points in the hand region, wherein the hand key points include a wrist j oint point and a plurality of finger j oint points; normalizing the coordinates of each of the plurality of finger j oint points relative to the wrist j oint point by utilizing the distance between the wrist j oint point and an adjacent finger j oint point with the wrist joint point as an origin; and feeding the normalized coordinates of each of the plurality of finger j oint points relative to the wrist j oint point into the hand gesture classification model to recognize an actual hand gesture; and training the hand gesture classification model as a classifier based on the actual hand gesture and a target hand gesture corresponding to the training sample image until the model converges.

In accordance with a further embodiment of the present disclosure, when training the hand gesture classification model, the target hand gesture corresponding to the training sample image is customized.

In accordance with a third aspect of the present disclosure, a vehicle with a hand gesture recognition function is provided, the vehicle comprising: a camera for capturing an input image to be recognized; the hand gesture recognition system of any of preceding aspects; and a vehicle control system configured to perform a corresponding vehicle control operation based on the recognized hand gesture.

In accordance with a fourth aspect of the present disclosure, a computer-readable storage medium storing instructions that, when executed, cause a vehicle to perform the method of any of preceding aspects is provided.

These and other features and advantages will become apparent by reading the following detailed description with reference to the associated drawings. It should be appreciated that the foregoing general description and the following detailed description are illustrative only and do not limit the claimed aspects.

BRIEF DESCRIPTION OF THE DRAWINGS

In order to be able to understand in detail the manner employed by the above-described features of the present disclosure, the contents briefly summarized above can be detailed described with reference to various embodiments, with some aspects illustrated in the accompanying drawings. It should be noted however that the drawings illustrate only certain typical aspects of the present disclosure and therefore should not be considered as limiting its scope since the description may allow for other equally valid aspects.

Figure 1 is a schematic architectural diagram of a hand gesture recognition system deployed on a vehicle side in accordance with an embodiment of the present disclosure.

Figure 2 is a schematic diagram of hand key points labeling in accordance with an embodiment of the present disclosure.

Figure 3 is a schematic diagram of a hand gesture and corresponding hand key points labeling in accordance with an embodiment of the present disclosure.

Figure 4 is an example flowchart of a hand gesture recognition method in accordance with an embodiment of the present disclosure.

Figure 5 is an example flowchart of a method for training a hand gesture classification model in accordance with an embodiment of the present disclosure.

Figure 6 is an exemplary vehicle that supports hand gesture recognition in accordance with an embodiment of the present disclosure.

Figure 7 is a schematic architecture diagram of a hand gesture recognition system in accordance with an embodiment of the present disclosure.

DETAILED DESCRIPTION

The present disclosure is described in detail below in conjunction with the accompanying drawings and features of the disclosure will be further apparent in the following specific description. The term "vehicle" as used throughout the specification refers to any type of cars, including but not limited to sedans, wagons, trucks, buses, etc.

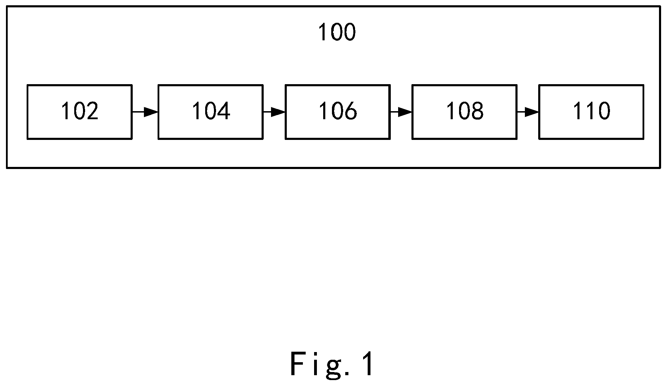

Figure 1 shows a schematic architectural diagram of a hand gesture recognition system 100 deployed on a vehicle side in accordance with an embodiment of the present disclosure. As shown in Fig. 1, the system 100 may include at least an image obtaining means 102, a hand detection means 104, a hand key point extraction means 106, a data normalization means 108, and a hand gesture recognition means 110.

The image obtaining means 102 may obtain an input image to be recognized.

In one embodiment, the image obtaining means 102 may receive a captured image (e.g., image of each frame in a video stream) from a vision sensor (e.g., a camera) on a vehicle side for subsequent hand gesture recognition.

The hand detection means 104 may detect a hand region in the input image.

In one embodiment, the hand detection means 104 may feed the input image into a palm detection model to obtain a hand bounding box containing a hand region, and may obtain the hand region by cutting according to the hand bounding box. The palm detection model can be trained by using a single-stage target detection algorithm, SSD. The palm detector instead of the hand detector is trained here because it is much simpler to detect a bounding box of a rigid object such as a palm than it is to detect a finger with joints. The above SSD algorithm can be optimized by the following operations: (1) using a non-maximum suppression algorithm, since the palm is a relatively small object, the non-maximum suppression algorithm works well even in the case of self-occlusion of both hands; (2) employing an encoder-decoder feature extractor for greater context awareness of a scene; and (3) minimizing focal loss during training to support a large number of anchors caused by high-scale variance.

It will be appreciated that the hand or palm detection model may be trained using any other manner known to those skilled in the art.

The hand key point extraction means 106 may extract coordinates of hand key points in the hand region, wherein the hand key points include a wrist joint point and a plurality of finger joint points.

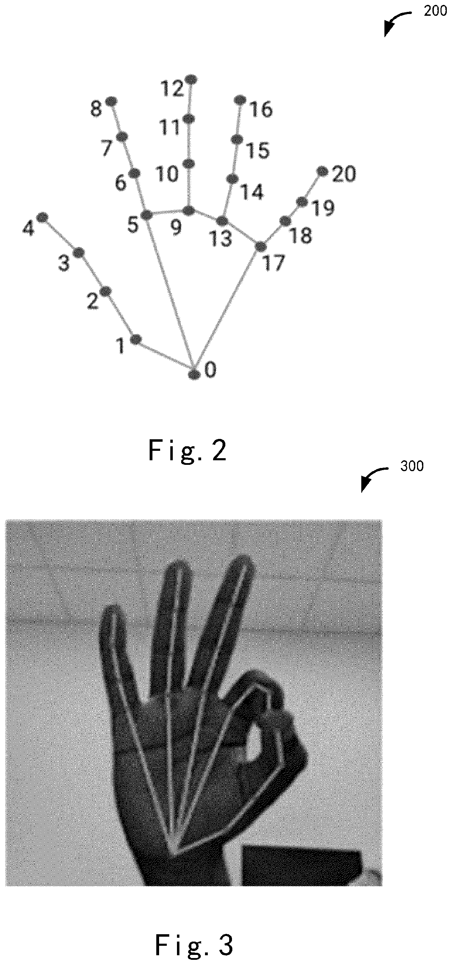

As shown in FIG. 2, FIG. 2 shows a schematic diagram of hand key points labeling 200 in accordance with an embodiment of the present disclosure. Hand key points may be understood as hand skeleton joint points, which may include a wrist joint point (one) and finger joint points (twenty). As shown in 200, the 21 joint points labelled from 0 to 20 are wrist joint point (WRIST), carpo-metacarpal joint point (THUMB_CMC), thumb-metacarpal joint point (THUMB MCP), thumb-interphalangeal joint point (TFIUMB_IP), thumb-tip joint point (THUMB_TIP), index-finger-metacarpal joint point (INDEX_FINGER_MCP), index-finger-proximal interphalangeal joint point (INDEX FINGER PIP), index-finger-distal interphalangeal joint point (INDEX FINGER DIP), index-finger-tip joint point (INDEX FINGER TIP), middle-finger-metacarpal joint point (MIDDLE FINGER MCP), middle-finger-proximal interphalangeal joint point (MIDDLE FINGER PIP), middle-finger-distal interphalangeal joint point (MIDDLE FINGER DIP), middle-finger-tip joint point (MIDDLE_FINGER_TIP), ring-finger metacarpal joint point (RING FINGER MCP), ring-finger-proximal interphalangeal joint point (RING FINGER PIP), ring-finger-distal interphalangeal joint point (RING FINGER DIP), ring-finger-tip joint point (RING FINGER TIP), pinky-metacarpal joint point (PINKY MCP), pinky-proximal interphalangeal joint point (PINKY PIP), pinky-distal interphalangeal joint point (PINKY DIP), pinky-tip joint point (PINKY TIP), respectively.

The 21 hand key points described above can be denoted using 3D coordinates (x, y, z), where (x, y) is normalized to [0.0, 1.0] by a width and height of an image, respectively, and z denotes depth, and the size of z may not be considered in the present application (e.g., z may be set to a fixed constant).

In one embodiment, the coordinates of the above hand key points (e.g., 3D coordinates of 21 joints) may be predicted by regression using a key point positioning model. In addition, it is possible to predict whether the detected hand is a left hand or a right hand. The above-mentioned key point positioning model can be trained by using machine learning (for example, neural networks, decision trees, etc.).

It will be appreciated that the key point positioning model may be trained using any other manner known to those skilled in the art.

Subsequently, returning to FIG. 1, the data normalization means 108 may normalize the coordinates of each of the plurality of finger joint points relative to the wrist joint point by utilizing the distance between the wrist joint point and an adjacent finger joint point with the wrist joint point as an origin.

In one embodiment, the adjacent finger joint point may be a pinky metacarpal joint point.

For example, as shown in FIG. 2, the coordinates of each of joint points 1-20 relative to joint point 0 may be normalized using a distance between the joint point 0 and 17 with the joint point 0 as an origin. The distance may be a Euclidean distance, for example, since the size of z may not be taken into account, the distance d between the joint point 0 (coordinates $(x_0, y_0)$) and the joint point 17 (coordinates $(x_{17}, y_{17})$) may be calculated as $d = \sqrt{(x_{17} - x_0)^2 + (y_{17} - y_0)^2}$. Here, since

the wrist joint point is taken as the origin, the normalized coordinate data is 20*3 floating point numbers.

As shown in FIG. 3, FIG. 3 shows a schematic diagram of a hand gesture "OK" and corresponding hand key points labeling 300 in accordance with an embodiment of the present disclosure. At 300, a hand region in an input image may be detected and coordinates of each hand key point (such as the joint points labeled in FIG. 3) in the hand region may be extracted, and the coordinates of each finger joint point relative to a wrist joint point may then be normalized using a distance between the wrist joint point and the pinky metacarpal joint point for subsequent hand gesture recognition.

Returning to FIG. 1, the hand gesture recognition means 110 may feed the normalized coordinates of each of the plurality of finger joint points relative to the wrist joint point into a hand gesture classification model to recognize a hand gesture.

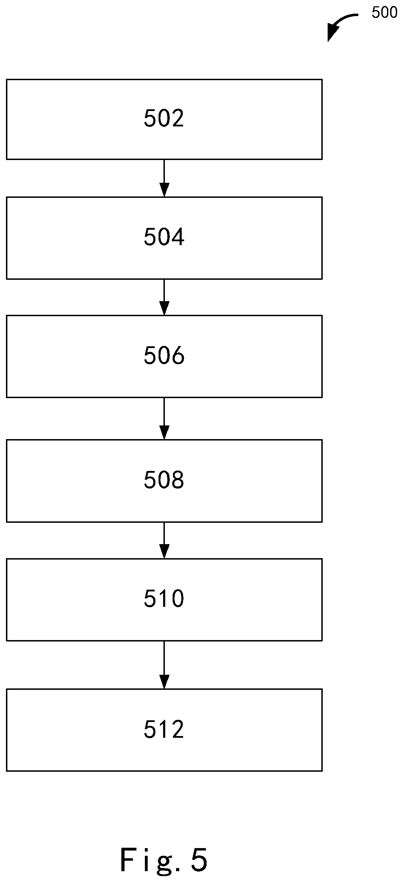

In one embodiment, the hand gesture classification model described above may be trained by machine learning (e.g., decision trees, etc.). Specific training methods may be described in further detail below with reference to FIG. 5.

In one embodiment, the hand gesture classification model described above may be trained based on custom set hand gestures. In this way, the user can customize setting hand gestures, e.g. on the vehicle side, to implement specific in-vehicle functions, which can further improve the user experience.

Those skilled in the art will appreciate that the hand gesture recognition system may be implemented in either hardware or software, and the modules may be merged or combined in any suitable manner.

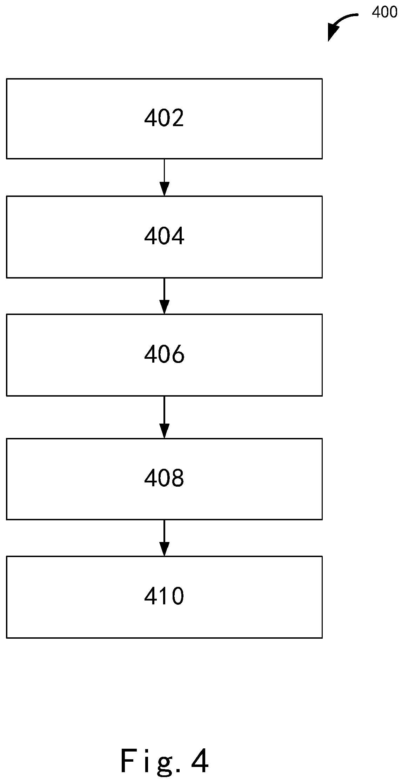

Fig. 4 shows an example flowchart of a hand gesture recognition method 400 in accordance with an embodiment of the present disclosure.

The method 400 begins at step 402 and the image obtaining means 102 may obtain an input image to be recognized. The input image may be a static image or image of each frame in a video stream captured with an in-vehicle camera.

In step 404, the hand detection means 104 may detect a hand region in the input image.

In one embodiment, the hand detection means 104 may send the input image to a hand or palm detection model to obtain a hand bounding box including the hand region, and may obtain the hand region by cutting according to the hand bounding box.

In step 406, the hand key point extraction means 106 may extract coordinates of hand key points in the hand region, wherein the hand key points include a wrist joint point and a plurality of finger joint points, as shown at 200 in FIG. 2, which labels 21 hand key points.

In one embodiment, the hand key point extraction means 106 may predict the coordinates of hand key points in the hand region by regression using a key point positioning model.

In step 408, the data normalization means 108 may normalize the coordinates of each of the plurality of finger joint points relative to the wrist joint point by utilizing the distance between the wrist joint point and an adjacent finger joint point with the wrist joint point as an origin.

In other words, a distance of each finger joint point from the wrist joint point in each dimension (i.e., coordinates of each finger joint point relative to the wrist joint point as an origin) may be normalized using a Euclidean distance between the wrist joint point and the adjacent finger joint point.

Preferably, the coordinates of each finger joint point with respect to the wrist joint point may be normalized using the distance between the wrist joint point (e.g., joint point 0 in FIG. 2) and the pinky metacarpal joint point (e.g., joint point 17 in FIG. 2).

In step 410, the hand gesture recognition device 110 may feed the normalized coordinates of each of the plurality of finger joint points relative to the wrist joint point into a hand gesture classification model to recognize a hand gesture.

In one embodiment, the hand gesture classification model may be trained by machine learning. For example, it may be a decision tree model.

As shown in FIG. 3, upon extracting the hand key point coordinates in FIG. 3, the coordinates of each finger joint point relative to the wrist joint point may first be normalized using the distance between the wrist joint point and the pinky metacarpal joint point, and then the normalized coordinate data (e.g., 60 floating point numbers) is fed into a trained hand gesture classification model to recognize a hand gesture "OK".

As a result, position-angle invariance can be achieved through the above-mentioned normalization operation, so that the detection of the model does not depend on hand direction, the distance of hand relative to camera, and the position of the hand in the image, which makes the subsequent hand gesture recognition results more accurate and require less training data, so it can be directly realized on the vehicle side, and the computing power requirements are lower.

Fig. 5 shows an example flowchart of a method 500 for training a hand gesture classification model in accordance with an embodiment of the present disclosure.

The method 500 begins at step 502 by obtaining a training sample image. The training sample image may be a static image or image of each frame in a video stream captured with an in-vehicle camera.

In step 504, a hand region is detected in the training sample image.

In step 506, coordinates of hand key points in the hand region are extracted, wherein the hand key points include a wrist joint point and a plurality of finger joint points.

In step 508, coordinates of each of the plurality of finger joint points relative to the wrist joint point are normalized by utilizing a distance between the wrist joint point and an adjacent finger joint point with the wrist joint point as an origin.

Preferably, the adjacent finger joint point may be a pinky metacarpal joint point.

In step 510, the normalized coordinates of each of the plurality of finger joint points relative to the wrist joint point are fed into a hand gesture classification model to recognize an actual hand gesture.

In step 512, based on the actual hand gesture and a target hand gesture corresponding to the training sample image as a label, the hand gesture classification model as a classifier is trained until the model converges.

In one embodiment, the above hand gesture classification model may be trained based on a decision tree, wherein entropy may be calculated for each value, and then the value corresponding to the maximum entropy may be found, thereby dividing the results into two categories, repeating the cycle until the model converges, or there is no more data to divide.

It can be understood that the hand gesture classification model described above can be trained based on any machine learning method known to those skilled in the art.

In one embodiment, when the hand gesture classification model is trained, the target hand gesture corresponding to the training sample image may be customized.

In one example, the predefined hand gesture categories may include number hand gestures "1-5", a hand gesture "OK", and the like.

Since only 60 floating-point numbers are input for each training sample when training the model, the computing power required to train the model is smaller, which can be realized directly on the vehicle side. It significantly reduces the model training time and improves accuracy of recognition results, which further improves the user experience.

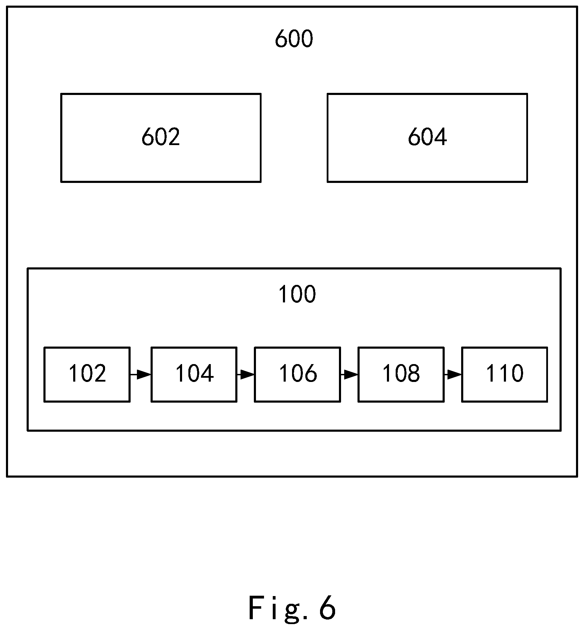

Fig. 6 shows an exemplary vehicle 600 that supports hand gesture recognition in accordance with an embodiment of the present disclosure.

The vehicle 600 may include a camera 602 which may be configured to capture an input image to be recognized and transmit the input image to the hand gesture recognition system 100 for subsequent hand gesture recognition operations.

In addition, the vehicle 600 may include the hand gesture recognition system 100 as shown in FIG. 1, which may be deployed, for example, on an in-vehicle computer, the hand gesture recognition system may be configured to: obtain an input image to be recognized; detect a hand region in the input image; extract coordinates of hand key points in the hand region, wherein the hand key points include a wrist joint point and a plurality of finger joint points; normalize the coordinates of each of the plurality of finger joint points relative to the wrist joint point by utilizing a distance between the wrist joint point and an adjacent finger joint point with the wrist joint point as an origin; and feed the normalized coordinates of each of the plurality of finger joint points relative to the wrist joint point into a hand gesture classification model to recognize a hand gesture.

In addition, the vehicle 600 may also include a vehicle control system 604 that may be configured to receive a hand gesture recognition result and perform a corresponding vehicle control operation based on the recognized hand gesture.

In one example scenario, when a user is navigating with a vehicle navigation system, after inputting a destination, the navigation system plans a navigation route and asks whether to navigate according to the navigation route, the user can make an "OK" hand gesture (as shown in FIG. 3), the camera 602 can capture an image containing the hand gesture and send it to the system 100 to recognize the hand gesture "OK", and then according to the hand gesture, the vehicle control system 604 can confirm that the navigation is carried out according to the navigation route.

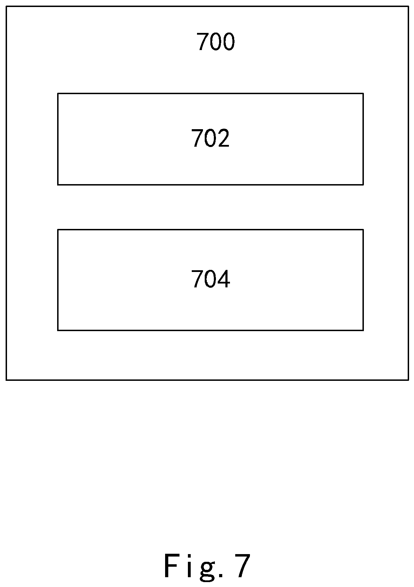

Fig. 7 shows a schematic architecture diagram of a hand gesture recognition system 700 in accordance with an embodiment of the present disclosure. The system 700 may be configured to perform aspects of the various methods described herein including for example the methods described with respect to Figs. 4 or 5.

As shown in Fig. 7, the system 700 may include one or more processors 702. The one or more processors 702 may include a central processing unit (CPU) which in some examples may be a multi-core CPU. Instructions executed at the CPU may for example be loaded from program memory associated with the CPU or may be loaded from memory 704. The one or more processors 702 may also include additional processing components customized for a particular function such as a graphics processing unit (GPU), a digital signal processor (DSP), a neural processing unit (NPU). In some examples the one or more processors 702 may be based on ARM or RISC-V instruction sets.

The System 700 also includes a memory 704. The memory 704 may include RAM, ROM, or a combination thereof. The memory 704 may store computer-executable instructions that, when executed by at least one processor 702, cause the at least one processor to perform various functions described herein, including: obtaining an input image to be recognized; detecting a hand region in the input image; extracting coordinates of hand key points in the hand region, wherein the hand key points include a wrist joint point and a plurality of finger joint points; normalizing the coordinates of each of the plurality of finger joint points relative to the wrist joint point by utilizing a distance between the wrist joint point and an adjacent finger joint point with the wrist joint point as an origin; and feeding the normalized coordinates of each of the plurality of finger joint points relative to the wrist joint point into a hand gesture classification model to recognize a hand gesture. In some cases, the memory 704 may in particular include a BIOS that may control basic hardware or software operations such as interaction with peripheral components or devices.

It will be appreciated that Fig. 7 is only one example of a system and other systems including fewer additional or alternative aspects may be consistent with the present disclosure.

The various illustrative blocks and modules described in conjunction with the disclosure herein may be implemented or executed with a general-purpose processor, DSP, ASIC, FPGA or other programmable logic device, discrete gate or transistor logic, discrete hardware components, or any combination thereof designed to perform the functions described herein. The general-purpose processor may be a microprocessor, but in an alternative, the processor may be any conventional processor, controller, microcontroller, or state machine. The processor may also be implemented as a combination of computing devices (e.g. a combination of a DSP and a microprocessor, multiple microprocessors, one or more microprocessors in cooperation with a DSP core, or any other such configuration).

The functions described herein may be implemented in hardware, software executed by a processor, firmware or any combination thereof. If implemented in software executed by a processor, the functions may be stored as one or more instructions or codes on a computer-readable medium or transferred by the computer-readable medium. Other examples and implementations fall within the scope of the present disclosure and the appended claims. For example, due to the nature of software, the functions described herein may be implemented using software executed by a processor, hardware, firmware, hardwired or any combination thereof. Features that implement the functions may also be physically located in various locations including being distributed so that portions of the function are implemented at different physical locations.

The content already described above includes examples of various aspects of the claimed subject matter. Of course, it is not possible to describe every conceivable combination of components or methods for the purpose of depicting the claimed subject matter, but one of ordinary skill in the art will recognize that many further combinations and arrangements of the claimed subject matter are possible. Thus, the disclosed subject matter is intended to cover all such alterations modifications and variations falling within the spirit and scope of the appended claims.

## Claims

1. A hand gesture recognition method for a vehicle, the method comprising:

   obtaining an input image to be recognized;
   detecting a hand region in the input image;
   extracting coordinates of hand key points in the hand region, wherein the hand key points include a wrist joint point and a plurality of finger joint points;
   normalizing the coordinates of each of the plurality of finger joint points relative to the wrist joint point by utilizing a distance between the wrist joint point and an adjacent finger joint point with the wrist j oint point as an origin; and
   feeding the normalized coordinates of each of the plurality of finger joint points relative to the wrist joint point into a hand gesture classification model to recognize a hand gesture.

2. The method of claim 1, wherein the adjacent finger joint point is a pinky metacarpal joint point.

3. The method of claim 1, wherein detecting a hand region in the input image further comprising:

   feeding the input image into a palm detection model to obtain a hand bounding box containing a hand region; and
   obtaining the hand region by cutting according to the hand bounding box.

4. The method of claim 1, wherein extracting coordinates of hand key points in the hand region further comprising:
   predicting the coordinates of hand key points in the hand region by regression using a key point positioning model.

5. The method of claim 1, wherein the hand gesture classification model is trained by machine learning.

6. The method of claim 5, wherein the hand gesture classification model is trained by:

   obtaining a training sample image;
   detecting a hand region in the training sample image;
   extracting coordinates of hand key points in the hand region, wherein the hand key points include a wrist joint point and a plurality of finger joint points;
   normalizing the coordinates of each of the plurality of finger joint points relative to the wrist joint point by utilizing a distance between the wrist j oint point and an adjacent finger j oint point with the wrist joint point as an origin; and
   feeding the normalized coordinates of each of the plurality of finger joint points relative to the wrist joint point into the hand gesture classification model to recognize an actual hand gesture; and
   training the hand gesture classification model as a classifier based on the actual hand gesture and a target hand gesture corresponding to the training sample image until the model converges.

**7.** The method of claim 6, wherein when training the hand gesture classification model, the target hand gesture corresponding to the training sample image is customized.

**8.** A hand gesture recognition system for a vehicle, the system comprising:

an image obtaining means configured to obtain an input image to be recognized;
a hand detection means configured to detect a hand region in the input image;
a hand key point extraction means configured to extract coordinates of hand key points in the hand region, wherein the hand key points include a wrist joint point and a plurality of finger joint points;
data normalization means configured to normalize the coordinates of each of the plurality of finger joint points relative to the wrist joint point by utilizing a distance between the wrist joint point and an adjacent finger joint point with the wrist joint point as an origin; and
a hand gesture recognition means configured to feed the normalized coordinates of each of the plurality of finger joint points relative to the wrist joint point into a hand gesture classification model to recognize a hand gesture.

**9.** The system of claim 8, wherein the adjacent finger joint point is a pinky metacarpal joint point.

**10.** The system of claim 8, wherein the hand detection means further configured to:

feed the input image into a palm detection model to obtain a hand bounding box containing a hand region; and
obtain the hand region by cutting according to the hand bounding box.

**11.** The system of claim 8, wherein the hand key point extraction means further configured to predict the coordinates of hand key points in the hand region by regression using a key point positioning model.

**12.** The system of claim 8, wherein the hand gesture classification model is trained by:

obtaining a training sample image;
detecting a hand region in the training sample image;
extracting coordinates of hand key points in the hand region, wherein the hand key points include a wrist joint point and a plurality of finger joint points;
normalizing the coordinates of each of the plurality of finger joint points relative to the wrist joint point by utilizing a distance between the wrist joint point and an adjacent finger joint point with the wrist joint point as an origin; and
feeding the normalized coordinates of each of the plurality of finger joint points relative to the wrist joint point into the hand gesture classification model to recognize an actual hand gesture; and
training the hand gesture classification model as a classifier based on the actual hand gesture and a target hand gesture corresponding to the training sample image until the model converges.

**13.** The system of claim 12, wherein when training the hand gesture classification model, the target hand gesture corresponding to the training sample image is customized.

**14.** A vehicle with a hand gesture recognition function, comprising:

a camera for capturing an input image to be recognized;
the hand gesture recognition system according to any of claims 8-13; and
a vehicle control system configured to perform a corresponding vehicle control operation based on the recognized hand gesture.

**15.** A computer-readable storage medium storing instructions that, when executed, cause a vehicle to perform the method of any of claims 1-7.

F i g. 1

Fig. 2

Fig. 3

400

```
┌─────────────────────────┐
│                         │
│           402           │
│                         │
└─────────────────────────┘
             │
             ▼
┌─────────────────────────┐
│                         │
│           404           │
│                         │
└─────────────────────────┘
             │
             ▼
┌─────────────────────────┐
│                         │
│           406           │
│                         │
└─────────────────────────┘
             │
             ▼
┌─────────────────────────┐
│                         │
│           408           │
│                         │
└─────────────────────────┘
             │
             ▼
┌─────────────────────────┐
│                         │
│           410           │
│                         │
└─────────────────────────┘
```

F i g. 4

500

```
┌─────────────────┐
│                 │
│       502       │
│                 │
└─────────────────┘
         │
         ▼
┌─────────────────┐
│                 │
│       504       │
│                 │
└─────────────────┘
         │
         ▼
┌─────────────────┐
│                 │
│       506       │
│                 │
└─────────────────┘
         │
         ▼
┌─────────────────┐
│                 │
│       508       │
│                 │
└─────────────────┘
         │
         ▼
┌─────────────────┐
│                 │
│       510       │
│                 │
└─────────────────┘
         │
         ▼
┌─────────────────┐
│                 │
│       512       │
│                 │
└─────────────────┘
```

Fig. 5

Fig. 6

700

702

704

Fig. 7

**EP 4 465 258 A1**

# EUROPEAN SEARCH REPORT

Application Number

EP 24 17 5445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/000119 A1 (HUAWEI TECH CO LTD [CN]) 26 January 2023 (2023-01-26) * the whole document * | 1-15 | INV.<br>G06V20/59<br>B60K35/10 |
| X,P | & EP 4 361 771 A1 (HUAWEI TECH CO LTD [CN]) 1 May 2024 (2024-05-01) * paragraphs [0004], [0005] - [0014], [0015] - [0016], [0062] - [0065], [0070], [0106] - [0109], [0113], [0143], [0227]; figure 12 * | 1-15 | G06F3/01<br>G06V40/10<br>G06V40/20 |
| X | US 2015/186707 A1 (JOO SIHYUN [KR]) 2 July 2015 (2015-07-02) * paragraphs [0010] - [0025], [0041] - [0065] * | 1,8,15 | |

| | TECHNICAL FIELDS SEARCHED (IPC) |
|---|---|
| | G06V<br>G06F<br>B60K<br>G06T |

The present search report has been drawn up for all claims

| Place of search | Date of completion of the search | Examiner |
|---|---|---|
| The Hague | 14 October 2024 | Mukasa, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5445

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | Publication date | Patent family member(s) | Publication date |
|---|---|---|---|
| WO 2023000119 A1 | 26-01-2023 | CN 113646736 A<br>EP 4361771 A1<br>WO 2023000119 A1 | 12-11-2021<br>01-05-2024<br>26-01-2023 |
| US 2015186707 A1 | 02-07-2015 | CN 104750242 A<br>KR 101526426 B1<br>US 2015186707 A1 | 01-07-2015<br>05-06-2015<br>02-07-2015 |

EPO FORM P0459

For more details about this annex : see Official Journal of the European Patent Office, No. 12/82